# EUROPÄISCHE PATENTANMELDUNG

(11) **EP 1 930 217 A2**
(43) Veröffentlichungstag der Anmeldung: **11.06.2008**
(21) Anmeldenummer: 07121857.2
(22) Anmeldetag: 29.11.2007
(51) Int. Cl.: B60R 21/13

(54) **Überrollschutzsystem für Kraftfahrzeuge mit einem sensorgesteuert, aktiv aufstellbaren Drehbügel**

(30) Priorität: 04.12.2006 DE 102006057029
(71) Anmelder: Automotive Group ISE Innomotive Systems Europe GmbH (in Liquidation), 51702 Bergneustadt (DE)
(72) Erfinder: Janisch, Mirko, 53797 Lohmar (DE); Lang, Jozsef, 1131 Budapest (HU); Nowack, Reinhard, 57489 Drolshagen (DE)
(74) Vertreter: Fuchs

(57) **Zusammenfassung**

Die Erfindung geht aus von einem bekannten Überrollschutzsystem für Kraftfahrzeuge mit zwei sitzbezogen karosseriefest angelenkten Drehbügeln (1), die jeweils mittels einer Haltevorrichtung in der abgelegten Ruheposition lagefixierbar und mittels eines Antriebes (2) sensorgesteuert in eine verriegelte Stützposition verdrehbar sind.

Um eine sehr kompakte Bauweise des Systems mit Mehrfach-Funktionsteilen erzielbar zu machen, sieht die Erfindung vor, dass zum Umsetzen der Bewegung des Antriebes (2) in eine Bügel-Drehbewegung eine Kniehebel-Anordnung (3) vorgesehen ist, die drehbeweglich mit dem Antrieb (2) einerseits und dem Drehbügel (1) andererseits gekoppelt ist, der in der Ruheposition des Drehbügels (1) zusammengefaltet zumindest teilweise innerhalb der vom Drehbügel (1) aufgespannten Fläche liegt.

## Beschreibung

Die Erfindung bezieht sich auf ein Überrollschutzsystem für Kraftfahrzeuge mit zwei sitzbezogen karosseriefest angelenkten Drehbügeln, die jeweils mittels einer Haltevorrichtung in der abgelegten Ruheposition lagefixierbar und mittels eines Antriebes sensorgesteuert in eine verriegelte Stützposition verdrehbar sind.

Derartige Überrollschutzsysteme dienen zum Schutz der Insassen in Kraftfahrzeugen ohne schützendes Dach, typischerweise in offenen Cabriolets oder Roadstern bei einem Überschlag, da das Fahrzeug über den aufgestellten Überrollkörper abrollen wird, der den Insassen einen Überlebensraum bietet.

Es ist dabei bekannt, einen die gesamte Fahrzeugbreite überspannenden, als Teil der Karosserie ausgebildeten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese so genannten "aktiven" Überrollschutzsysteme weisen weit verbreitet einen in einem fahrzeugfesten Führungskörper geführten U-förmigen Überrollbügel oder aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung, die Wiedereinfahrsperre, ein Zurückdrücken des Überrollbügels verhindert. Dabei ist typischerweise jedem Fahrzeugsitz eine Kassette zugeordnet. Eine derartige Kassetten-Konstruktion eines aktiven Überrollschutzsystems mit einem U-förmigen Überrollbügel zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges Überrollschutzsystem besitzt typischerweise eine zwischen Fond und Gepäckraum angebrachte Rahmenkonstruktion mit einem sich über die Innenbreite des Fahrzeuges erstreckenden, karosseriefest angebrachten Profil-Querträger, der u.a. Führungsmittel für zwei nebeneinander angeordnete U-förmige oder einen wagenbreiten Überrollbügel aufweist.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb. Es sind dabei auch Fahrzeuge bekannt, bei denen ein Überrollbügel sich nahezu über die Wagenbreite erstreckt und um eine quer zur Fahrtrichtung verlaufende Achse (die sogenannte Y-Achse) aus einer horizontalen Ruhelage in eine vertikale Schutzposition hochschwenkbar ist. Als Nachteil wird dabei empfunden, dass sich der Überrollbügel beim Hochschwenken in Richtung zum Kopf der Fahrzeuginsassen hin bewegt. Ferner ist es nicht einfach, die Schwenklagerungen und den Antriebsmechanismus in das Fahrzeugkonzept zu integrieren.

Es ist ferner auch eine aktive Überrollschutz-Konstruktion bekannt, die zwei, bezogen auf die Fahrzeugquerrichtung, nebeneinander angeordnete Überrollbügel aufweist, die jeweils um eine im wesentlichen in Fahrzeuglängsrichtung, der so genannten X-Richtung, verlaufenden Schwenkachse in einer im wesentlichen lotrechten Fahrzeugquerebene schwenkbar sind, und somit im Gefahrenfall aus einer abgesenkten Ruhelage in eine nach oben gerichtete Stützlage (und später zurück) schwenkbar sind. Diese aktiven schwenkbaren Überrollbügel werden im folgenden als Drehbügel bezeichnet, wobei auch die Bezeichnung Schwenkbügel bekannt ist.

Eine derartige Überrollschutz-Konstruktion mit Drehbügeln zeigen z.B. die DE 39 25 515 C1 und die DE 40 17 778 A1.

Von einem derartigen Überrollschutzsystem mit Drehbügeln geht die Erfindung aus. Es benötigt prinzipiell wenig Bauraum und ist gut in Fahrzeugkonzepte einbeziehbar bzw. vermindert das Verletzungsrisiko der Fahrzeuginsassen beim schnellen Ausschwenken, da die Drehbügel aus einer taschenähnlichen Vertiefung an den Köpfen vorbei und nicht auf sie zu verschwenkt werden.

Im bekannten Fall haben die Drehbügel eine im wesentlichen U-förmige Grundgestalt, mit einem bogenförmigen Überrollkopf und zwei daran befestigten linearen Schenkeln, deren freie Enden mit einem Quersteg verbunden sind, welcher den Drehbügel zu einem geschlossenen Rahmen ergänzt und eine fluchtende Verlängerung aufweist. Unterhalb des Quersteges und seiner Verlängerung erstreckt sich ein integriertes Blechteil, an welchem die Lagerbuchse der Bügelschwenklagerung sowie prinzipiell eine Anlenkung für den Drehbügel-Antrieb ausgebildet sind.

Als Antriebmechanismus für die Drehbügel sind jeweils zwei linear nach unten wirkende Antriebe vorgesehen, ein Federantrieb für die schnelle Crash-Aufstellung und ein hydraulischer Antrieb für eine willkürliche Aufstellung (Komfortantrieb), welche mit einem Ende gemeinsam am Überrollbügelrahmen im seitlichen Abstand von der Schwenkachse angelenkt sind, und welche sich jeweils mit ihrem anderen Ende an einem integrierten Grundrahmen abstützen, welcher auch die Halterung im Ruhezustand sowie Verriegelung im aufgestellten Zustand (Wiedereinfahrsperre) trägt.

Die Antriebe und damit auch der Grundrahmen erstrecken sich im Wesentlichen linear nach unten, so dass, auch wegen des notwendigen Aufstellhubes, ein relativ großer Bauraum in vertikaler Richtung benötigt wird, der nicht bei jedem Kraftfahrzeug zur Verfügung steht.

Weitere Drehbügel sind bekannt aus der DE 41 08 878 A1 sowie aus der AT 43 52 U1. Die erstgenannte Druckschrift zeigt beispielsweise einen sitzbezogenen, translatorisch ausfahrenden Überrollbügel mit einer Kniehebelanordnung zum Umsetzen eines Drehantriebs. Die zweitgenannte Druckschrift zeigt einen unter anderem drehbaren Überrollschutz mit einem translatorischen Antrieb, der mit einer Kniehebelanordnung versehen werden kann.

Der Erfindung liegt die Aufgabe zugrunde, das eingangs bezeichnete Überrollschutzsystem hinsichtlich des Drehbügels und seines Aufstellmechanismus so zu gestalten, dass mit wenigen Komponenten eine sehr kompakte Bauweise erzielbar ist, die insbesondere auch wenig Bauraum in vertikaler Richtung benötigt.

Die Lösung dieser Aufgabe gelingt bei einem Überrollschutzsystem für Kraftfahrzeuge mit zwei sitzbezogen karosseriefest angelenkten Drehbügeln, die jeweils mittels einer Haltevorrichtung in der abgelegten Ruheposition lagefixierbar und mittels eines Antriebes sensorgesteuert in eine verriegelte Stützposition verdrehbar sind, gemäß der Erfindung dadurch, dass zum Umsetzen der Bewegung des Antriebes in eine Bügel-Drehbewegung eine Kniehebel-Anordnung vorgesehen ist, die drehbeweglich mit dem Antrieb einerseits und dem Drehbügel andererseits gekoppelt ist, und dass die Kniehebel-Anordnung derart mit dem Antrieb und dem Drehbügel gekoppelt ist, dass sie in der Ruheposition des Drehbügels zusammengefaltet zumindest teilweise innerhalb der vom Drehbügel aufgespannten Fläche liegt.

Durch die erfindungsgemäße Maßnahme gelingt es, ein Überrollschutzsystem mit Drehbügeln zu schaffen, das mit großem Vorteil eine kompakte Bauweise erlaubt und daher nur einen sehr geringen Bauraum sowohl in der Tiefe als auch in der vertikalen Erstreckung benötigt. Es ist daher auch mit Vorteil zum Nachrüsten vorhandener Cabriolet-Fahrzeuge bzw. zum Einbau in kleinen Cabriolets geeignet. Eine besonders kompakte Bauweise wird dadurch erzielt, dass die Kniehebel-Anordnung in der Ruheposition des Drehbügels zusammengefaltet zumindest teilweise, vorzugsweise überwiegend, innerhalb der vom Drehbügel aufgespannten Fläche liegt.

Gemäß einer weiteren Ausgestaltung der Erfindung kann die Kniehebel-Anordnung eine weitere wesentliche Funktion eines Überrollschutzsystems übernehmen, wenn sie derart mit dem Antrieb und dem Drehbügel gekoppelt ist, dass sie in der aufgestellten Position des Drehbügels im entfalteten Zustand ein Stützelement zur Ableitung von bei einem Überschlag auftretenden Kräften bildet.

Weitere Ausgestaltungen und Weiterbildungen der Erfindung sind in Unteransprüchen gekennzeichnet und ergeben sich auch aus der Figurenbeschreibung.

Anhand eines in den Zeichnungen in verschiedenen Ansichten und Zuständen dargestellten Ausführungsbeispieles wird die Erfindung näher beschrieben:

Es zeigen:
- Fig. 1: in einer schematisierten Frontansicht den erfindungsgemäß ausgebildeten Drehbügel mit Kniehebelaufstellung und pyrotechnischem Antrieb im abgelegten Ruhezustand,
- Fig. 2: den Drehbügel nach Fig. 1 in einer isometrischen Darstellung,
- Fig. 3: in einer Frontansicht den Drehbügel nach Fig. 1 im vollständig aufgestellten Zustand,
- Fig. 4: den aufgestellten Drehbügel nach Fig. 3 in einer rückwärtigen Frontansicht, und
- Fig. 5: den aufgestellten Drehbügel nach Fig. 3 in einer isometrischen Darstellung.

Die Figuren zeigen einen aktiv aufstellbaren Drehbügel 1 für ein Überrollschutzsystem für Kraftfahrzeuge mit einer bevorzugten Ausführungsform des zugehörigen Aufstell-Antriebes in Form einer pyrotechnischen Kolben/Zylinder-Einheit 2 in Verbindung mit einem Kniehebel-Gestänge 3 zum Umsetzen der translatorischen Bewegung des Kolbens der Einheit 2 in eine rotatorische Bewegung.
Dargestellt sind auch zwei andere notwendige Komponenten des Überrollschutzsystems, die Haltevorrichtung oder Halterung (Lagefixierung des abgelegten Drehbügels) und die Wiedereinfahrsperre (Verriegelung im aufgestellten Zustand des Bügels). Alle anderen Bauteile sind der besseren Übersicht nicht dargestellt. Sie entsprechen bekannten Ausbildungen.

Typischerweise sind in einem Fahrzeug sitzbezogen zwei Drehbügel in Fahrzeugquerrichtung nebeneinander und um eine Schwenkachse in Fahrzeuglängsrichtung aufstellbar angebracht. Die beiden Drehbügel können aber auch jeweils in einer Seitenwand des Fahrzeuges schwenkbar um eine Achse in Fahrzeugquerrichtung angebracht sein.

Der Drehbügel 1 ist, wie insbesondere die isometrischen Darstellungen zeigen, als schmalbandiger Rahmen ausgebildet, und weist kopfseitig einen bogenförmigen Rahmenabschnitt 1 a und basisseitig einen nach oben offenen rechteckförmigen Rahmenabschnitt 1 b mit abgerundeten Ecken auf. An dem einen Übergang zwischen beiden Abschnitten ist ein ösenartiger Fortsatz 1 c angeformt, der eine als Bohrung symbolisch dargestellte Lagerbuchse 4 zur Aufnahme der karosseriefesten Drehachse des Bügels (nicht dargestellt) aufweist. An dem anderen Übergang zwischen beiden Abschnitten ist eine schmalbandige Diagonalstrebe 1 d angeformt, deren anderes Ende an dem diagonal gegenüberliegenden Eckpunkt des rechteckförmigen Abschnittes angebracht ist. Beide Übergänge sind durch eine schmalbandige Querstrebe 1 e miteinander verbunden, die einen oberen konkaven Abschnitt besitzt und sich mit der Diagonalstrebe 1 d vereint.

Der Antrieb für die Drehbewegung des Drehbügels, die pyrotechnische Kolben/Zylinder-Einheit 2, besteht aus einem Zylinder 2 a, welcher bodenseitig einen pyrotechnischen Treibsatz (auch als Ladung bezeichnet) enthält und darüber einen Kolben mit einer Kolbenstange 2 b axial verschiebbar aufnimmt. Zum Umsetzen der translatorischen Bewegung der Kolbenstange in eine Drehbewegung des Bügels 1 ist ein Kniehebel-Gestänge 3 vorgesehen. Ein Kniehebel besteht bekanntlich aus zwei durch ein Gelenk, das Knie, - hier im Drehpunkt 3 a - miteinander verbundenen einarmigen Hebeln - hier ein Stützhebel 3 b und ein Schwenkhebel 3 c -, die auch an ihren anderen Enden in einem Gelenk beweglich gelagert sind.

Das freie Ende des Schwenkhebels 3 c ist mittig an der Diagonalstrebe 1 d im Drehpunkt 3 d und das freie Ende des Stützhebels 3 b ist an einer karosseriefesten Befestigungsplatte 5 im Drehpunkt 3 e angelenkt. Damit der Drehbügel in diesen Drehpunkten nicht zu stark in der Tiefe aufträgt, sind die jeweils zu verbindenden Elemente miteinander verzapft.

An der Befestigungsplatte 5 ist auch das bodenseitige Ende des Zylinders 2 a der pyrotechnischen Antriebs-Einheit 2 mit einer Schelle 2 d im Drehpunkt 5 a drehbeweglich angelenkt.

Das freie Ende der Kolbenstange 2 b ist am Stützhebel 3 b im Bereich des Knies 3 a im Drehpunkt 2 c drehbeweglich verzapft angelenkt. Unterhalb der Querstrebe 1 e ist an einem Lagerbock des Bügelrahmens eine hakenförmige Drehklinke 6 angelenkt, die zur Verriegelung des aufgestellten Drehbügels dient, wie noch erläutert werden wird. Diese Drehklinke 6 ist mittels einer Schenkelfeder 7 in Verriegelungsrichtung vorgespannt.

### Die Arbeitsweise des erfindungsgemäßen Drehbügels ist wie folgt:

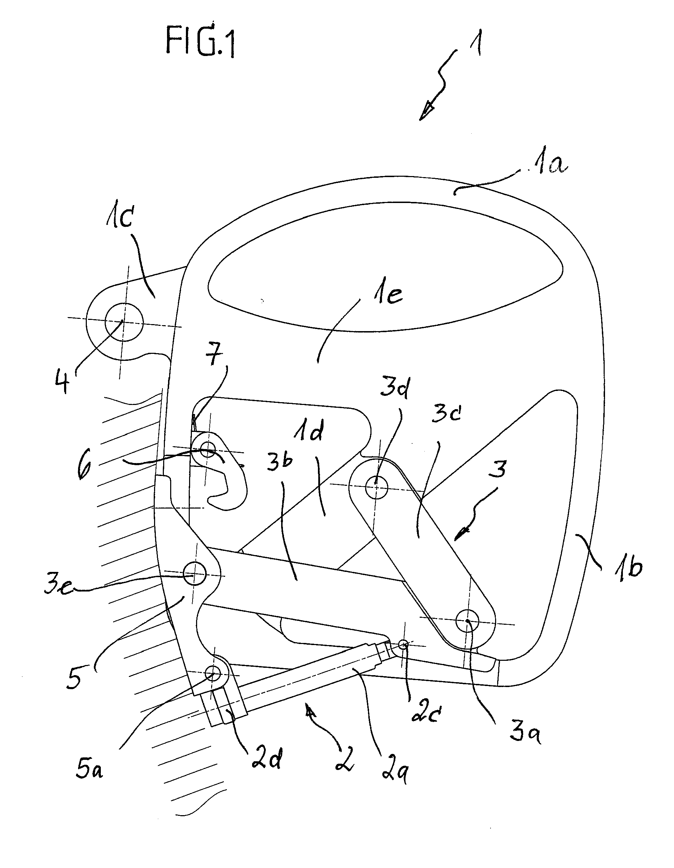

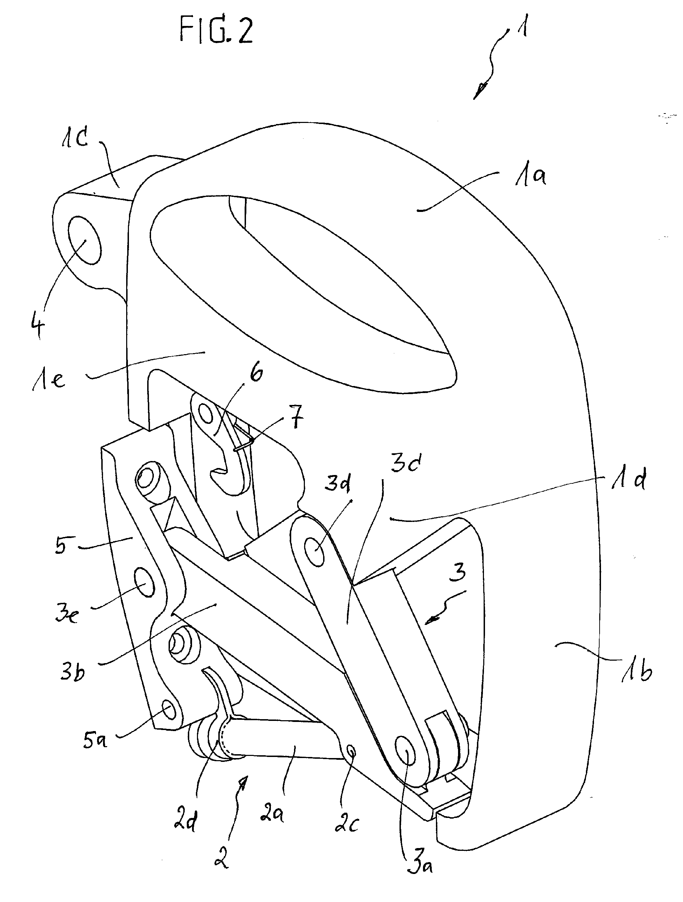

Im abgelegten Grundzustand des Drehbügels (Figuren 1 und 2) ist das Knickhebel-Gestänge 3 "zusammengefaltet" und bedeckt zusammen mit der Kolben/Zylinder-Einheit 2 im wesentlichen nur die vom Drehbügel eingenommene Fläche, so dass der Überrollbügel mit seinem Antriebsmechanismus sehr kompakt baut und nur einen sehr geringen Bauraum benötigt, insbesondere was die vertikale Erstreckung anbelangt.

Da der Kolben in dem Zylinder 2 a im Ruhezustand durch eine form-und/oder kraftschlüssige Verbindung einen "strammen" Sitz aufweist, z.B. durch entsprechende Kolbenringe oder vorzugsweise durch eine lokal begrenzte Verbindung, z.B. eine rillenartige Verquetschung (Verprägung), eine Bördelung, eine Pressanpassung, eine Verstemmung oder dergleichen, ist der Drehbügel in der Ruhelage auch dadurch lagefixiert; der "stramme" Sitz stellt somit die Haltevorrichtung dar mit einer Auslösekraft größer als 300 N und kleiner als 5000 N.

Erkennt die (nicht dargestellte) konventionelle Sensorik einen drohenden Überschlag, wird der pyrotechnische Treibsatz im Zylinder 2 a gezündet und der Kolben mit seiner Kolbenstange 2 b fährt aus. Da die Kolbenstange im Bereich des Knies 3 a kräftemäßig angreift, faltet sie nach dem Kniehebelprinzip die beiden einarmigen Hebel, d.h. den Stützhebel 3 b und den Schwenkhebel 3 c, auseinander. Dabei wird der Stützhebel 3 b aufgestellt und der dabei mit aufgestellte sowie verschwenkte Schwenkhebel 3 c verschwenkt zugleich den Überrollbügel 1 aus der Sicht nach Fig. 1 gegen den Uhrzeigersinn.

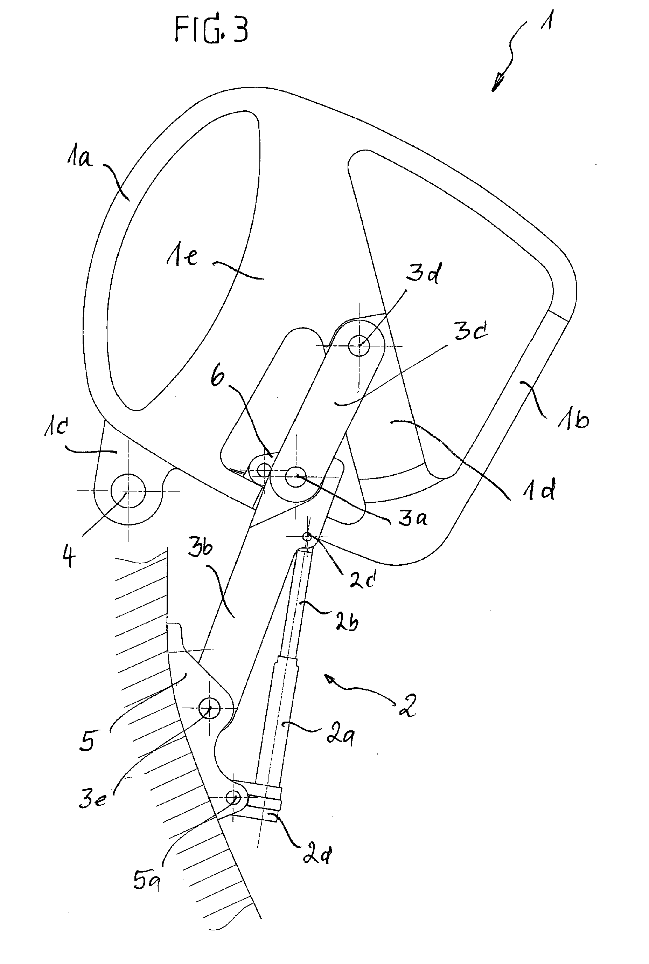

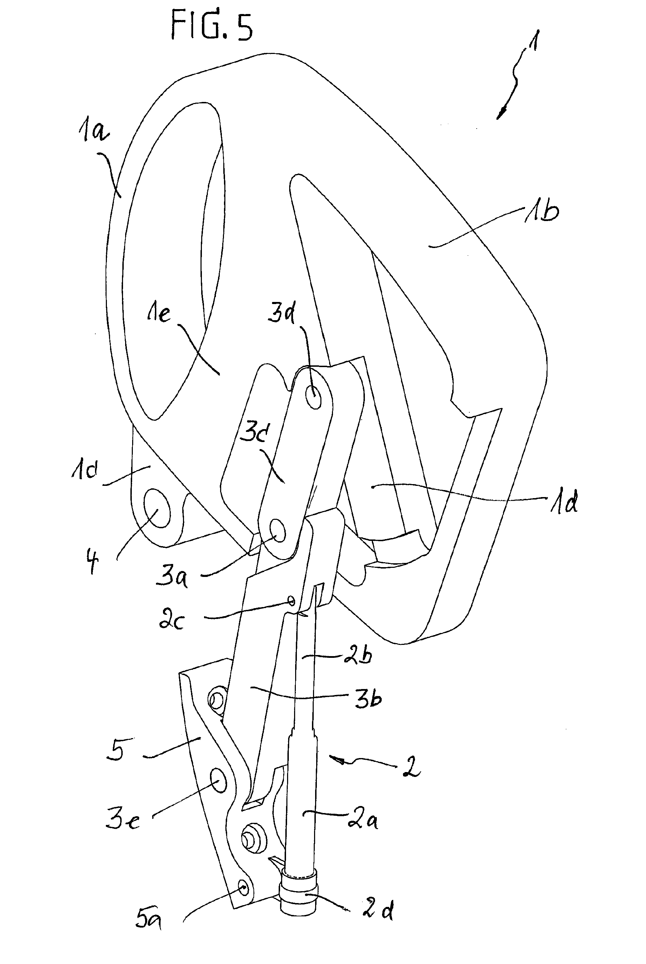

Die Figuren 3, 4 und 5 zeigen dabei den vollständig in die Schutzstellung hochgeschwenkten Drehbügel. Der Kniehebel befindet sich dabei in einer Übertotpunktlage und das knieseitige Ende des Schwenkhebels 3 c stützt sich dabei an einer vorsprungartigen Schräge am knieseitigen Ende des Stützhebels 3 b ab.

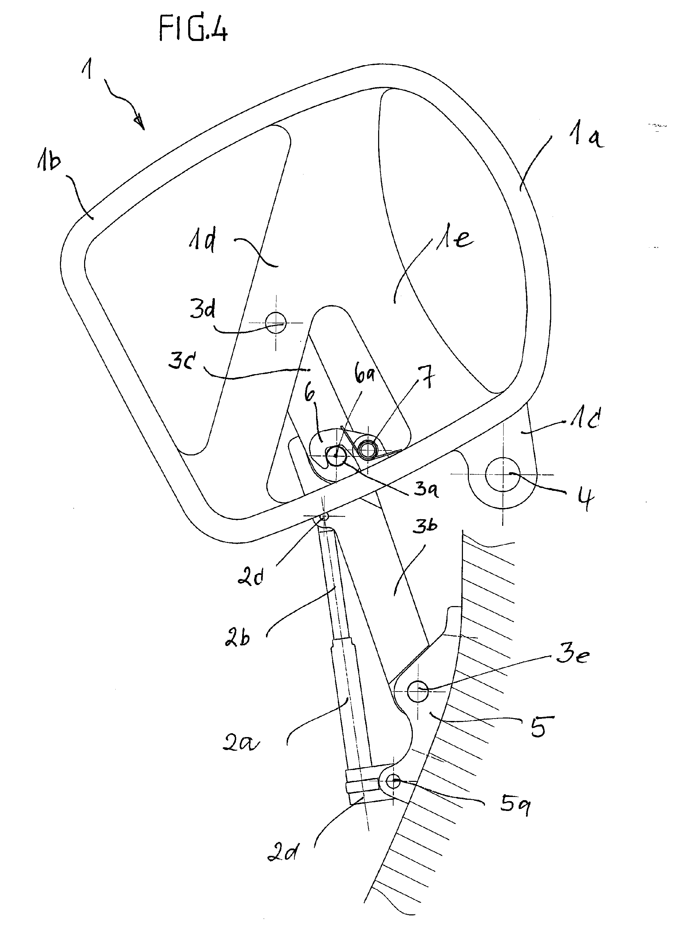

In dieser Position ist, wie insbesondere die rückwärtige Ansicht nach Fig. 4 zeigt, die Drehklinke 6 mit der im Knie-Drehpunkt 3 a aufgenommenen Welle 6 a im verriegelnden Wirkeingriff und hält den Kniehebel im entfalteten Zustand. Sie bildet zusammen mit der Übertotpunktstellung und der Abstützung des Schwenkhebels die Wiedereinfahrsperre.

Die Wiedereinfahrsperre und die Haltevorrichtung des Überrollbügelsystems benötigen somit, wie man aus den Figuren 1 - 5 erkennt, keinen zusätzlichen Bauraum, d.h. die dargestellte Konstruktion unterstützt auch insoweit die kompakte Bauweise.

Zur zusätzlichen oder alternativen Abstützung im aufgestellten Zustand könnte am Stützhebel 3 b unmittelbar unterhalb des Bügelrahmens ein vorspringender Anschlag angebracht sein, welcher bei einem Überschlag in direkten Wirkkontakt mit den Bügelrahmen tritt und diesen zusätzlich abstützt.

Gemäß einer anderen Ausgestaltung der Erfindung kann einmal die pyrotechnische Kolben/Zylinder-Einheit 2 und zum anderen das Kniehebel-Gestänge 3 anders angekoppelt sein. So ist es denkbar, den längeren Stützhebel 3 b im mittigen Drehpunkt 3 d an der Diagonalstrebe 1 d und den kürzeren Schwenkhebel 3 c im Drehpunkt 3 e an der karosseriefesten Befestigungsplatte 5 anzulenken. Der Zylinder 2 a ist dann über die Schelle 2 d an einem mittigen Fortsatz der Diagonalstrebe und die Kolbenstange 2 b ist im Drehpunkt 3 a des Knies angelegt.

Die Wirkungsweise dieser Ausgestaltung ist entsprechend derjenigen nach der beschriebenen und dargestellten Ausgestaltung.

Anstelle des pyrotechnischen Antriebes kann auch ein Federantrieb vorgesehen sein, z.B. eine linear aufstellende Druck-Schraubenfeder oder eine Spiralfeder.

Die Überrollbügel sind typischerweise Metallteile, die nach einschlägigen Verfahren hergestellt werden, wobei typischerweise die Bügelköpfe mit einem Kunststoff umschäumt sind.

### Bezugszeichenliste

- 1: Drehbügel
- 1 a: bogenförmiger Rahmenabschnitt
- 1 b: rechteckförmiger Rahmenabschnitt
- 1 c: ösenartiger Fortsatz
- 1 d: Diagonalstrebe
- 1 e: Querstrebe
- 2: pyrotechnische Kolben/Zylinder-Einheit
- 2 a: Zylinder
- 2 b: Kolbenstange
- 2 c: Drehpunkt
- 2 d: Schelle
- 3: Kniehebel-Gestänge
- 3 a: Drehpunkt (Knie) des Kniehebels
- 3 b: Stützhebel
- 3 c: Schwenkhebel
- 3 d,: e Drehpunkte
- 4: Lagerbuchse
- 5: Befestigungsplatte
- 5 a: Drehpunkt
- 6: Drehklinke
- 6 a: Welle
- 7: Schenkelfeder

## Patentansprüche

1. Überrollschutzsystem für Kraftfahrzeuge mit zwei sitzbezogen karosseriefest angelenkten Drehbügeln (1), die jeweils mittels einer Haltevorrichtung in der abgelegten Ruheposition lagefixierbar und mittels eines Antriebes (2) sensorgesteuert in eine verriegelte Stützposition verdrehbar sind, **dadurch gekennzeichnet, dass** zum Umsetzen der Bewegung des Antriebes (2) in eine Bügel-Drehbewegung eine Kniehebel-Anordnung (3) vorgesehen ist, die drehbeweglich mit dem Antrieb (2) einerseits und dem Drehbügel (1) andererseits gekoppelt ist, und dass die Kniehebel-Anordnung (3) derart mit dem Antrieb (2) und dem Drehbügel (1) gekoppelt ist, dass sie in der Ruheposition des Drehbügels (1) zusammengefaltet zumindest teilweise innerhalb der vom Drehbügel (1) aufgespannten Fläche liegt.

2. Überrollschutzsystem nach Anspruch 1, **dadurch gekennzeichnet, dass** die Kniehebel-Anordnung (3) einen Stützhebel (3 b) und einen Schwenkhebel (3 c) aufweist, welche in einem das Knie bildenden Drehpunkt (3 a) drehbeweglich miteinander verbunden sind und welche mit dem freien Ende drehbeweglich fahrzeugfest sowie mit dem Drehbügel (1) verbunden sind.

3. Überrollschutzsystem nach Anspruch 1 oder 2, **dadurch gekennzeichnet, dass** der Antrieb (2) drehbeweglich mit einem Ende im Bereich des Knies der Kniehebel-Anordnung (3) und mit dem anderen Ende fahrzeugfest angelenkt ist.

4. Überrollschutzsystem nach einem der Ansprüche 1 bis 3, **dadurch gekennzeichnet, dass** der Antrieb (2) als translatorischer Antrieb ausgebildet ist.

5. Überrollschutzsystem nach Anspruch 4, **dadurch gekennzeichnet, dass** der translatorische Antrieb durch eine pyrotechnische Kolben/Zylinder-Einheit (2) gebildet ist.

6. Überrollschutzsystem nach Anspruch 4, **dadurch gekennzeichnet, dass** der translatorische Antrieb durch eine Schraubenfeder gebildet ist.

7. Überrollschutzsystem nach Anspruch 4, **dadurch gekennzeichnet, dass** der translatorische Antrieb durch eine Kombination aus einer pyrotechnischen Kolben/Zylinder-Einheit mit einem Schraubenfeder-Antrieb gebildet ist.

8. Überrollschutzsystem nach Anspruch 5 oder 7, **dadurch gekennzeichnet, dass** der Kolben in dem Zylinder (2 a) der pyrotechnischen Kolben/Zylinder-Einheit (2) mit einer vorgegebenen, die Haltevorrichtung vorgebenden Haltekraft aufgenommen ist.

9. Überrollschutzsystem nach einem der Ansprüche 1 bis 3, **dadurch gekennzeichnet, dass** der Antrieb durch einen Spiralfeder-Antrieb gebildet ist.

10. Überrollschutzsystem nach einem der Ansprüche 1 bis 9, **dadurch gekennzeichnet, dass** der Drehbügel (1) aus einem schmalbandigen Rahmen besteht und die Kniehebel-Anordnung (3) innerhalb des Rahmens, in der Ruheposition des Drehbügels gefaltet ablegbar, angeordnet ist.

11. Überrollschutzsystem nach Anspruch 10, **dadurch gekennzeichnet, dass** der Rahmen einen oberen bogenförmigen Abschnitt (1 a) und einen unteren rechteckförmigen Abschnitt (1 b) aufweist, und eine Querstrebe (1 e), welche die Übergänge zwischen beiden Abschnitten (1 a, 1 b) miteinander verbindet sowie eine Diagonalstrebe (1 d), welche einen Übergang mit der diagonal gegenüberliegenden Ecke des rechteckförmigen Abschnittes verbindet, vorgesehen sind.

12. Überrollschutzsystem nach Anspruch 2 und Anspruch 11, **dadurch gekennzeichnet, dass** das freie Ende des Schwenkhebels (3 c) drehbeweglich mittig an der Diagonalstrebe (1 d) angelenkt ist.

13. Überrollschutzsystem nach Anspruch 11 oder 12, **dadurch gekennzeichnet, dass** an einem der Übergänge zwischen beiden Abschnitten (1 a, 1 b) ein ösenartiger Fortsatz (1 c) mit einer Lagerbuchse (4) für die Drehlagerung des Drehbügels (1) angebracht ist.

14. Überrollschutzsystem nach einem der Ansprüche 1 bis 13, **dadurch gekennzeichnet, dass** die Kniehebel-Anordnung (3) derart mit dem Antrieb (2) und dem Drehbügel (1) gekoppelt ist, dass sie in der aufgestellten Position des Drehbügels im entfalteten Zustand ein Stützelement zur Ableitung von bei einem Überschlag auftretenden Kräften bildet.

15. Überrollschutzsystem nach Anspruch 14, **dadurch gekennzeichnet, dass** die Kniehebel-Anordnung (3) in eine Übertotpunktlage entfaltet ist.

16. Überrollschutzsystem nach Anspruch 14 oder 15, **dadurch gekennzeichnet, dass** eine verriegelbare Sicherungseinrichtung für den aufgestellten Zustand der Kniehebel-Anordnung (3) mit einem ersten, am Drehbügel (1) angebrachten Sicherungselement (6) und einem zweiten, an der Kniehebel-Anordnung (3) angebrachten Sicherungselement (6 a), vorgesehen ist.
